# EUROPEAN PATENT APPLICATION

(11) **EP 4 769 169 A1**
(43) Date of publication of application: **01.07.2026**
(21) Application number: 24858031.8
(22) Date of filing: 02.07.2024
(51) Int. Cl.: G06F 16/14

(54) **METADATA ACCESS METHOD AND APPARATUS, DEVICE, STORAGE MEDIUM, AND PROGRAM PRODUCT**

(30) Priority: 28.08.2023 CN 202311086103
(71) Applicant: Tencent Technology (Shenzhen) Company Limited, Shenzhen, Guangdong 518000 (CN)
(72) Inventor: FENG, Xiaoyan, Shenzhen, Guangdong 518057 (CN); PAN, Anqun, Shenzhen, Guangdong 518057 (CN); LEI, Hailin, Shenzhen, Guangdong 518057 (CN); WU, Xin, Shenzhen, Guangdong 518057 (CN); LIN, Ziyan, Shenzhen, Guangdong 518057 (CN); ZHAO, Yang, Shenzhen, Guangdong 518057 (CN); CHEN, Zaini, Shenzhen, Guangdong 518057 (CN)
(74) Representative: EP&C
(86) International application number: PCT/CN2024/103078
(87) International publication number: WO 2025/044487

(57) **Abstract**

The present application relates to the field of cloud technology, and discloses a metadata access method and apparatus, a device, and a storage medium. According to the method, a global metadata cache scheme is used, and relates to a three-layer architecture, i.e., a global cache file, a cache description array, and a memory block; storage areas can be divided according to the data length of metadata in a shared memory; and when target metadata needs to be acquired for a target process, metadata can be queried layer by layer according to the three-layer architecture until target address information of target metadata that has been cached is obtained, and the target address information is returned to the target process for realizing the access of the target metadata. In this way, the metadata required by all the working processes can be accessed by means of the method, so that metadata caches of the working processes do not need to be respectively maintained by the working processes, thereby reducing the repeated metadata cache between the working processes, reducing the occupied memory resources, reducing the transmission resource occupation of the repeated metadata, and improving the resource utilization rate.

## Description

This application claims priority to Chinese Patent Application No. 202311086103X, filed with the China National Intellectual Property Administration on August 28, 2023 and entitled "METADATA ACCESS METHOD AND APPARATUS, DEVICE, AND STORAGE MEDIUM".

### FIELD OF THE TECHNOLOGY

This application relates to the field of computer technologies, and in particular, to metadata access in the field of cloud technologies.

### BACKGROUND OF THE DISCLOSURE

With the development of cloud technologies, cloud computing has become a new standard for enterprise applications. A cloud native architecture provides an efficient manner for developing, deploying, and managing application programs in a cloud. Through continuous practice and exploration, a cloud native mode has been gradually accepted as a best practice for building and deploying a cloud native application program. A cloud native database is a cloud native data infrastructure, has features such as high elasticity, high availability, and scalability through technologies such as resource decoupling and resource pooling, and supports demands of applications in different service fields on high performance, high concurrency, and on-demand use of data management.

In the cloud native mode, metadata is not stored in a computing cluster. When the metadata needs to be used, the metadata may need to be obtained by requesting from a metadata server. Therefore, to reduce a frequency of the metadata request, a metadata cache may need to be maintained in the computing cluster.

### SUMMARY

Embodiments of this application provide a metadata access method and apparatus, a device, and a storage medium, to reduce duplicate resources occupied by a metadata cache, thereby improving resource utilization.

According to an aspect, a metadata access method is provided, the method including:
performing, in response to a metadata query request of a target process, a comparison operation between target index information of target metadata carried in the metadata query request and index information of each cached metadata in a global cache file, the global cache file including at least one record, each record including: index information of cached metadata and a slot identifier of a cache description array associated with the cached metadata, and each cache description array mapping to at least one memory block configured for storing said cached metadata;
accessing, upon detecting a match from the comparison operation, a target cache description array for the target metadata based on a target slot identifier associated with the target index information;
obtaining, from the target cache description array when determining that the target metadata is currently in a valid state, address information of a target memory block caching the target metadata, target address information of the target memory block being configured to indicate location information of the target memory block in a shared memory, and the shared memory being divided into storage areas of the metadata based on different data lengths; and
returning the address information of the target memory block to the target process.

According to an aspect, a metadata access apparatus is provided, the apparatus including:
a global matching unit, configured to perform, in response to a metadata query request of a target process, a comparison operation between target index information of target metadata carried in the metadata query request and index information of each cached metadata in a global cache file, the global cache file including at least one record, each record including: index information of cached metadata and a slot identifier of a cache description array associated with the cached metadata, and each cache description array mapping to at least one memory block configured for storing said cached metadata;
an array access unit, configured to access, upon detecting a match from the comparison operation, a target cache description array for the target metadata based on a target slot identifier associated with the target index information; and
an address obtaining unit, configured to obtain, from the target cache description array when determining that the target metadata is currently in a valid state, address information of a target memory block caching the target metadata, the address information of the target memory block being configured to indicate location information of the target memory block in a shared memory, the shared memory being divided into storage areas of the metadata based on different data lengths; and return the address information of the target memory block to the target process.

According to an aspect, a computer device is provided, including a memory, a processor, and a computer program stored in the memory and capable of being run on the processor, the processor, when executing the computer program, implementing the operations of any one of the foregoing methods.

According to an aspect, a computer storage medium is provided, having a computer program stored therein, the computer program, when executed by a processor, implementing the operations of any one of the foregoing methods.

According to an aspect, a computer program product is provided, the computer program product including a computer program, and the computer program being stored in a computer-readable storage medium. A processor of a computer device reads the computer program from the computer-readable storage medium, and the processor executes the computer program, causing the computer device to perform the operations of any one of the foregoing methods.

In the embodiments of this application, a solution of metadata global caching is used. In the caching solution, a three-layer architecture including a global cache file, a cache description array, and a memory block is used. The global cache file is configured for storing index information of cached metadata and a slot identifier of a corresponding cache description array, to index to a lower-layer cache description array. The cache description array is configured for storing description information related to caching of the metadata. The memory block is configured for actually caching the metadata. Therefore, when target metadata needs to be obtained in a target process, querying may be performed layer by layer based on the foregoing three-layer architecture, until target address information of the cached target metadata is obtained, and the target address information is returned to the target process, to implement access to the target metadata. In this way, for all working processes, the metadata needed by the working processes can be accessed in this method. In this way, metadata caches of the working processes do not need to be maintained by the working processes, duplicate metadata caches between the working processes are reduced, occupied memory resources are reduced, transmission resources occupied by duplicate metadata are reduced, and resource utilization is improved.

### BRIEF DESCRIPTION OF THE DRAWINGS

To describe the technical solutions of some embodiments of this disclosure more clearly, the following briefly introduces the accompanying drawings for describing some embodiments. The accompanying drawings in the following description show only some embodiments of the disclosure, and a person of ordinary skill in the art may still derive other drawings from these accompanying drawings without creative efforts. In addition, one of ordinary skill would understand that aspects of some embodiments may be combined together or implemented alone.
FIG. 1 is a schematic diagram of an application scenario according to an embodiment of this application.
FIG. 2 is a schematic architectural diagram related to metadata access according to an embodiment of this application.
FIG. 3 is a schematic flowchart of a metadata access method according to an embodiment of this application.
FIG. 4 is a schematic diagram of a matching process according to an embodiment of this application.
FIG. 5 is a schematic diagram of a comparison process according to an embodiment of this application.
FIG. 6 is a schematic diagram of a file description array set according to an embodiment of this application.
FIG. 7 is a schematic diagram of partitions of a global cache file according to an embodiment of this application.
FIG. 8 is an exemplary schematic flowchart of metadata access according to an embodiment of this application.
FIG. 9 is another schematic flowchart of a metadata access method according to an embodiment of this application.
FIG. 10 is a schematic diagram of a free memory list according to an embodiment of this application.
FIG. 11A and FIG. 11B are other exemplary schematic flowcharts of metadata access according to an embodiment of this application.
FIG. 12 is still another schematic flowchart of a metadata access method according to an embodiment of this application.
FIG. 13A and FIG. 13B are still other exemplary schematic flowcharts of metadata access according to an embodiment of this application.
FIG. 14 is a schematic structural diagram of a metadata access apparatus according to an embodiment of this application.
FIG. 15 is a schematic diagram of a composition structure of a computing apparatus according to an embodiment of this application.
FIG. 16 is a schematic diagram of a composition structure of another computing apparatus to which an embodiment of this application is applied.

### DESCRIPTION OF EMBODIMENTS

To make the objectives, technical solutions, and advantages of this application clearer and more understandable, the technical solutions in embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application. The embodiments of this application and features in the embodiments may be randomly combined with each other in a case that no conflict occurs. In addition, although a logical order is shown in a flowchart, in some cases, the shown or described operations may be performed in an order different from the order herein.

In the following implementation of this application, user data, for example, user voice data, may be involved. When the embodiments of this application are applied to a product or technology, a related permission or consent is required, and collection, use, and processing of related data need to comply with related laws, regulations, and standards of related countries and regions.

For ease of understanding the technical solutions provided in the embodiments of this application, some key terms used in the embodiments of this application are first explained herein.

Metadata: Metadata is information about organization of data, a data field, and a relationship thereof. In short, the metadata is data configured for describing data, and includes descriptive information about the data and an information resource. For example, the metadata refers to meta information configured for managing data stored in a service object. Data in any file system is divided into data and metadata. The data refers to actual data in a common file, and the metadata refers to system data configured for describing features of a file, such as access permission, a file owner, and distribution information (inode...) of file data blocks. In a cluster file system, distribution information includes locations of files on a magnetic disk and a location of the magnetic disk in a cluster. To operate a file, the service object needs to obtain metadata of the file first, so as to locate a location of the file and obtain content or a related attribute of the file. In the embodiments of this application, the metadata includes, but is not limited to: a name of a data set, setting of various function attributes, an address in which a data replica is stored, and the like.

Global cache file: A global cache refers to a metadata cache shared between working processes in a computing cluster. The working processes jointly maintain the same set of metadata caches through a mechanism, so that requests for the same metadata between different working processes can be effectively combined, and frequent requests for data from a metadata server are avoided.

Database definition language (DDL): It is a language in a structured query language (SQL) that may be responsible for defining a data structure and defining a database object, and usually includes three operation syntaxes: CREATE, ALTER, and DROP.

The embodiments of this application relate to a cloud technology, and are designed based on a metadata cache in the cloud technology.

The cloud technology is a hosting technology that unifies a series of resources such as hardware, software, and networks in a wide area network or a local area network to implement computing, storage, processing, and sharing of data. The cloud technology is a collective name of a network technology, an information technology, an integration technology, a management platform technology, an application technology, and the like based on application of a cloud computing business mode, and may form a resource pool for use on demand, which is flexible and convenient. A cloud computing technology is to become an important support. A backend service of a technical network system requires a lot of computing and storage resources, such as video websites, image websites, and more portal websites. With the rapid development and application of the internet industry, each item may have its own identification flag in the future, and the identification flags may be transmitted to a backend system for logical processing. Data of different levels is processed separately, and all kinds of industry data require a strong system support, which can be achieved only through the cloud computing.

With the development of the cloud technology, the cloud technology may be generally implemented in combination with other technologies, and for example, are usually applied to the field of artificial intelligence (AI) technologies. AI is a theory, a method, a technology, and an application system that uses a digital computer or a machine controlled by the digital computer to simulate, extend, and expand human intelligence, perceive an environment, obtain knowledge, and use the knowledge to obtain an optimal result. In other words, AI is a comprehensive technology in computer science and attempts to understand the essence of intelligence and produce a new intelligent machine that can react in a manner similar to the human intelligence. AI is to study the design principles and implementation methods of various intelligent machines, to enable the machines to have the functions of perception, reasoning, and decision-making.

The AI technology is a comprehensive discipline and relates to a wide range of fields including both hardware-level technologies and software-level technologies. Basic AI technologies generally include, for example, a sensor, a dedicated AI chip, the cloud computing, distributed storage, a big data processing technology, a pre-training model technology, an operating/interaction system, and electromechanical integration. Therefore, implementation of the AI technology is usually accompanied with application of the cloud technology. For example, the AI technology is usually implemented relying on technologies such as the cloud computing, the cloud storage, and a database.

The cloud computing is a computing mode, in which computing tasks are distributed on a resource pool including a large quantity of computers, so that various application systems can obtain computing power, storage space, and information services according to requirements. A network providing resources is referred to as "cloud". For a user, the resources in the "cloud" seem to be infinitely expandable, and may be obtained readily, used on demand, expanded readily, and paid for use.

As a basic capability provider of the cloud computing, a cloud computing resource pool (a cloud platform for short, and generally referred to as an infrastructure as a service (IaaS) platform) is established, and a plurality of types of virtual resources are deployed in the resource pool, to be selected by an external customer for use. The cloud computing resource pool may include: a computing device (which is a virtualization machine, and includes an operating system), a storage device, and a network device.

According to logical function division, a platform as a service (PaaS) layer may be deployed on an IaaS layer, and a software as a service (SaaS) layer may be deployed on the PaaS layer, or a SaaS may be directly deployed on an IaaS. The PaaS is a platform on which software runs, such as a database and a web container. The SaaS is various types of service software, such as a web portal site and a short message service group sender. Generally, the SaaS and the PaaS are upper layers relative to the IaaS.

The cloud storage is a new concept extended and developed on a concept of the cloud computing. A distributed cloud storage system (a storage system for short below) refers to a storage system that integrates, by using a function such as a cluster application, a grid technology, and a distributed storage file system, a large quantity of different types of storage devices (may be referred to as storage nodes) in a network to work collaboratively through application software or an application interface, and jointly provides data storage and service access functions to the outside.

The database may be simply regarded as an electronic file cabinet, for example, a place in which electronic files are stored. A user may perform an operation such as adding, querying, updating, or deleting data in the files. The so-called "database" is a data set that is stored together in a manner, can be shared with a plurality of users, has as little redundancy as possible, and is independent of an application.

The embodiments of this application relate to a metadata caching solution in a cloud native mode. The metadata refers to system data configured for describing features of a file, such as access permission, a file owner, and distribution information of file data blocks. For example, in a cluster file system, distribution information includes locations of files on a magnetic disk and locations of the magnetic disk in a cluster. To operate a file, a service object needs to obtain metadata of the file first, so as to locate a location of the file and obtain content or a related attribute of the file. Generally, a cloud native database does not store metadata information in a computing cluster, and needs to request needed metadata from a metadata server. To reduce a frequency of the request, a metadata cache needs to be maintained in the computing cluster.

In the related art, a metadata caching solution that is generally used is a PostgreSQL (PG) caching solution. In this solution, a working process executing a query maintains a set of local metadata caches, and when the metadata expires, requests new metadata from the metadata server. In this way, each working process in the computing cluster needs to request to obtain the metadata from the metadata server. The same metadata may be repeatedly obtained. In addition to needing to repeatedly occupy transmission resources, the same metadata also occupies memory resources in the computing cluster for repeated storage, which obviously greatly reduces resource utilization.

In addition, when a DDL operation is performed, changed metadata is organized into a set of invalid messages, which are transmitted to another working process. Then, according to the PG caching solution, all caches of all working processes may be invalidated, so that when the DDL operation is performed, invalidation messages may be delivered to all the working processes. Apparently, more transmission resources are also occupied. In addition, when one piece of data is invalidated, all metadata caches are invalidated. Apparently, more resources are consumed for new metadata caches, resulting in resource waste.

Based on this, the embodiments of this application provide a metadata access method. In this method, a brand new solution of metadata global caching is used. In the caching solution, a three-layer architecture including a global cache file, a cache description array, and a memory block is used. The global cache file is configured for storing index information of cached metadata and a slot identifier of a corresponding cache description array, to index to a lower-layer cache description array. The cache description array is configured for storing description information related to caching of the metadata. The memory block is configured for actually caching the metadata.

Then, when target metadata needs to be obtained in a target process, matching is performed in the global cache file based on target index information carried in a metadata query request of the target process. If the matching succeeds, it indicates that the target metadata has been cached. In this way, a target cache description array is accessed through a target slot identifier associated with the target index information. When it is determined that the target metadata is currently in a valid state, target address information of a target memory block that caches the target metadata is obtained from the target cache description array, and the target address information is returned to the target process, to implement access to the target metadata. Querying is performed layer by layer based on the foregoing three-layer architecture, until the target address information of the cached target metadata is obtained, so that access to the target metadata can be implemented. In this way, for all working processes, the metadata needed by the working processes can be accessed in this method, so that metadata caches of the working processes do not may be maintained by the working processes, duplicate metadata caches between the working processes are reduced, and occupied memory resources are reduced. In addition, a quantity of times of requesting a metadata server by a computing cluster is reduced, and duplicate data requests of the working processes are combined, thereby reducing transmission resources occupied by duplicate metadata, and improving resource utilization.

In addition, in the embodiments of this application, the metadata is partitioned, and partitions correspond to corresponding partition version information. Therefore, when the DDL operation is performed, it is unnecessary to update all metadata caches, and only some metadata needs to be updated. Whether a data state of the metadata is valid is described by using version information and verification of the version information, to avoid a case in which all metadata caches are invalidated when one piece of data is invalidated, and reduce a degree of resource waste.

In the embodiments of this application, a full set of access procedures is designed for various cases related to the metadata cache, including cases in which accessed metadata is cached, not cached, and needs data replacement. Global access requirements of the metadata for various working processes are satisfied in a plurality of cases, and requests for the same metadata information between different working processes are effectively combined. Then, some information that can be protected by locking is placed in a local cache, to effectively avoid frequently requesting data from the metadata server due to an invalid lease.

Application scenarios to which the technical solutions of the embodiments of this application can be applied are briefly described below. The application scenarios described below are merely configured for describing the embodiments of this application but are not intended to limit this application. In an implementation process, the technical solutions provided in the embodiments of this application may be flexibly used based on an actual requirement.

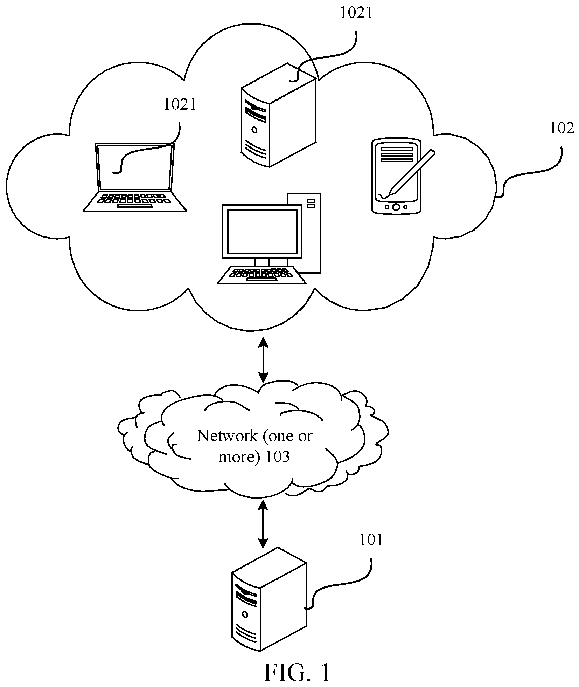

The solutions provided in the embodiments of this application may be applicable to a computing cluster scenario, for example, applicable to a computing cluster scenario in a cloud native mode or a non-cloud native mode. FIG. 1 is a schematic diagram of an application scenario according to an embodiment of this application. In the scenario, a metadata server 101 and a computing device set 102 may be included.

In a possible implementation, the computing device set 102 may be a computing cluster.

The metadata server 101 is configured to store metadata, may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform, but is not limited thereto.

The computing cluster is configured for actual computing or application deployment. The computing cluster may include a plurality of computing nodes, and each computing node may be configured to deploy a computing task, an application, or the like of a user based on a deployment request of the user. Each computing node may be a physical server, or may be any computer device having a computing capability, such as a mobile phone, a tablet computer (PAD), a notebook computer, a desktop computer, a smart television, a smart vehicle-mounted device, a smart wearable device, or an aircraft.

The metadata access method in the embodiments of this application may be performed by the computing node in the computing cluster. The computing node may include one or more processors, a memory, an interactive I/O interface, and the like. The memory of the computing node may store respective program instructions that may be executed in the metadata access method provided in the embodiments of this application. When executed by the processor, the program instructions can be configured for implementing the metadata access process provided in the embodiments of this application.

For example, when a target process on the computing node needs to access target metadata, matching may be performed in a global cache file based on target index information carried in a metadata query request of the target process. If the matching succeeds, it indicates that the target metadata has been cached. In this way, a target cache description array is accessed through a target slot identifier associated with the target index information. When it is determined that the target metadata is currently in a valid state, target address information of a target memory block that caches the target metadata is obtained from the target cache description array, and the target address information is returned to the target process, to implement access to the target metadata.

In a possible implementation, the computing device set 102 may be a terminal device set. The terminal device set may include a plurality of terminal devices, and each terminal device may be a device of a tenant. Under a multi-tenant architecture, all tenants have their own metadata, and all operations related to the tenants are driven through the metadata. During use of the metadata, each time the terminal device is used, the metadata needs to be queried and calculated from a database. Therefore, to reduce a frequency of requests for the metadata, the method in this embodiment of this application may be used to maintain a set of global metadata caches in the terminal device. When needed, the metadata may be queried from a local cache.

In this embodiment of this application, the metadata server 101 and the computing device set 102 may be in direct or indirect communication connection through one or more networks 103. The network 103 may be a wired network, or may be a wireless network. For example, the wireless network may be a mobile cellular network, or may be a wireless-fidelity (Wi-Fi) network, or certainly may be another possible network, which is not limited in this embodiment of this application.

The following describes the method provided in the exemplary implementations of this application with reference to the application scenario described above and the accompanying drawings. The foregoing application scenario is only illustrated to facilitate understanding of the spirit and principle of this application, and the implementations of this application are not limited in this aspect.

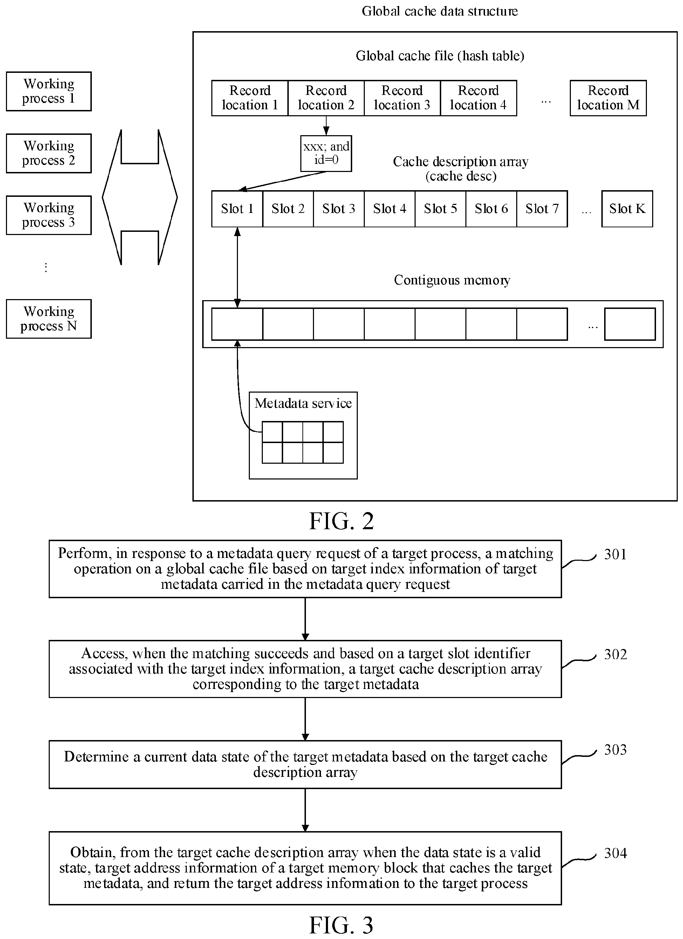

FIG. 2 is a schematic architectural diagram related to metadata access according to an embodiment of this application. Using a computing cluster as an example, a plurality of working processes, for example, working processes 1 to N shown in FIG. 2, may be deployed on the computing cluster. The plurality of working processes share a set of metadata global caches. The metadata global cache uses a global cache data structure shown in FIG. 2. The data structure is formed by the following parts:

### (1) Global cache file

The global cache file is configured for recording global cache information, for example, representing which piece of metadata is cached. Referring to FIG. 2, the global cache file may include a plurality of record locations, for example, a record location 1 to a record location M shown in FIG. 2. Each record location may be configured for storing at least one record. Each record may be configured for storing at least one piece of index information related to metadata and a slot identifier of a cache description array related to the metadata. Therefore, when target metadata needs to be queried, whether the global cache file includes corresponding index information may be queried. If matching succeeds, a slot identifier associated with the index information is obtained, and a further query continues to be performed.

In a possible implementation, the global cache file may be implemented in a manner of a hash table, and each entry in the hash table may be configured for storing one record.

### (2) Cache description array (cache desc)

Referring to FIG. 2, a second layer of the data structure is the cache description array, which includes a plurality of slots, for example, a slot 1 to a slot K shown in FIG. 2. Each slot may be configured for storing one or more cache description arrays. The cache description array includes information such as control information of cached metadata, information for describing a use condition of a corresponding memory block, and a memory offset corresponding to metadata information.

Each record in the global cache file uniquely points to one slot identifier of the cache description array, so that when matching in the global cache file succeeds, a slot identifier of cache description information of the corresponding target metadata can be found, to access a cache description array corresponding to the slot identifier. As shown in FIG. 2, the found slot identifier is "id=0", which points to a 1^{st} slot (for example, the slot 1 in FIG. 2). This indicates that a cache description array of the target metadata that is currently needed is stored in the slot, and related information of the target metadata can be obtained when the cache description array of the slot is accessed.

### (3) Contiguous memory

The contiguous memory is configured for caching metadata obtained from a metadata server. Because values of the metadata have different data lengths, the contiguous memory may be divided into memory blocks based on different upper limits of the data lengths. The memory blocks of different sizes may be configured for storing metadata of different data lengths. For example, the memory may be divided based on 128, 256, 512, 1024, 2048, 4096, and 8192 bytes, and used on demand. A proportion of the memory of each size may be set based on a commonly used length ratio of the metadata. When the metadata needs to be cached, the metadata server may be invoked remotely to obtain the corresponding metadata, and the corresponding metadata is cached in a cache of the metadata server, to facilitate directly and locally querying and obtaining the metadata subsequently.

Referring to the global cache data structure shown in FIG. 2, a subscript of a corresponding desc is found in the hash table based on index information of matched metadata, and the corresponding metadata may be obtained when address information in the memory is mapped based on the subscript. The metadata cached in the memory comes from the metadata server.

Based on the foregoing global cache data structure, an embodiment of this application provides a metadata access method. FIG. 3 is a schematic flowchart of a metadata access method according to an embodiment of this application. The method may be performed by a computer device. The computer device may be the terminal device or the computing node shown in FIG. 1. A procedure of the method is as follows:
Operation 301: Perform, in response to a metadata query request of a target process, a matching operation on a global cache file based on target index information of target metadata carried in the metadata query request.

In this embodiment of this application, as shown in FIG. 2, the global cache file includes at least one record, and each record includes: index information of cached metadata and a slot identifier of a cache description array corresponding to corresponding metadata, each cache description array corresponding to at least one memory block configured for caching the metadata.

In a possible implementation, a metadata access process in this embodiment of this application may be performed by each working process. For example, when a piece of target metadata is needed in each working process, the metadata access method provided in this embodiment of this application is performed to obtain the corresponding target metadata.

In a possible implementation, a proxy process may be further added in each computer device, to implement the metadata access process. The proxy process is invoked, so that access to the metadata may be implemented in each working process. In this way, each working process maintains a local metadata cache, which may be implemented by using the proxy process. In this way, when there are duplicate metadata requests, the proxy process may combine the duplicate metadata requests of a plurality of working processes, to reduce resource waste.

In a possible implementation, an implementation process of this embodiment of this application may be performed by each working process and the proxy process in cooperation. For example, the working process may perform the process of accessing the metadata, and the proxy process may implement work related to maintenance of metadata caches. Certainly, during actual application, setting may be performed according to a requirement. This is not limited in this embodiment of this application.

In an embodiment, when the target metadata needs to be used in the target process, the target process may initiate the metadata query request. The metadata query request carries the target index information of the to-be-queried target metadata. Because the global cache file stores the index information of the cached metadata, the target index information is matched with the index information of the cached metadata, to determine whether the target metadata is currently cached locally.

The metadata is generally stored through a metadata file. For example, for a common database, the metadata may be stored in a manner of a metadata table because different tables of a metadata service have different unique indexes. According to this information, a metadata file identifier is maintained, which may be referred to as a cache id. One cache id uniquely corresponds to one metadata file. Each metadata file may include a plurality of data columns. Different data columns are identified through index values of different columns, which are referred to as keys.

In this way, when the target process performs a metadata query, the imported target index information may include the metadata file identifier cache id and a corresponding data column index value key of the target metadata in the metadata file. During matching, matching needs to be performed based on values of the cache id and the key. Only when the cache id and the key are matched and hit, it can be considered that the matching succeeds.

In a possible implementation, the global cache file may be implemented in a manner of a hash table. The hash table is a data structure that is directly accessed based on a key value. For example, the key value is mapped to a location in the table to access a record, to accelerate searching. This mapping function is referred to as a hash function, and an array in which the record is stored is referred to as the hash table.

Further, in this embodiment of this application, in a maintenance process of the hash table, for example, when the target metadata is cached, a corresponding hash identifier hash value is calculated through the data column index value key in the imported target index information in a target mapping method. Hash value+cache id is used as a hash key, and the target index information and the hash identifier are stored in an entry corresponding to the hash key, for example, values of the cache id, the hash value, and an index column key are stored.

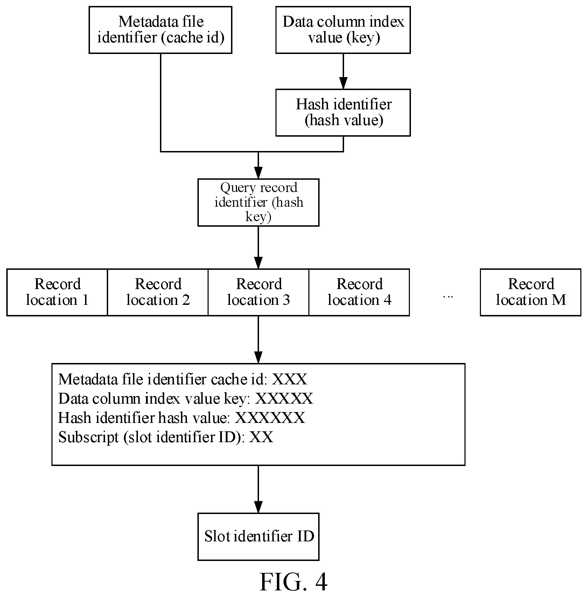

Then, during query, FIG. 4 is a schematic diagram of a matching process according to an embodiment of this application. The matching process is similar to the foregoing record storage process. For example, first, the corresponding hash identifier hash value is generated based on the data column index value key in the imported target index information in the target mapping method, and a query record identifier hash key corresponding to the target metadata is generated based on the hash identifier hash value and the metadata file identifier cache id. A corresponding record location may be located from the hash table through the hash key, to determine a target record corresponding to the target metadata in the global cache file. Finally, each piece of information is matched with corresponding values in the target record one by one. This considers a case in which the hash key calculated in the foregoing process may have a hash collision, and a plurality of records may be stored at a location corresponding to the same hash value. Therefore, to avoid a matching error, whether each piece of information is incorrect needs to be further checked. For example, as shown in FIG. 4, when it is determined, based on the hash key, that the target record of the target metadata is stored at a record location 3, the metadata file identifier cache id, the data column index value key, and the hash identifier hash value are respectively matched with the corresponding values included in the target record.

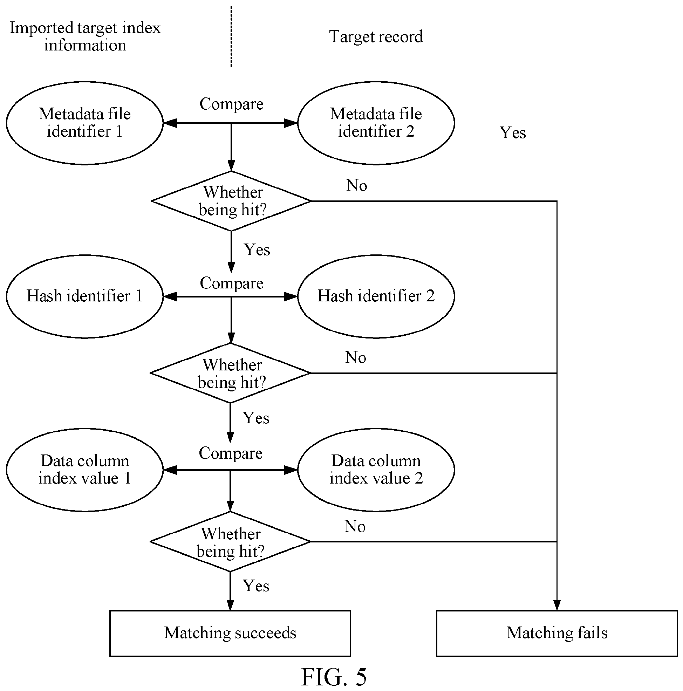

In a possible implementation, FIG. 5 is a schematic diagram of a comparison process according to an embodiment of this application. When the target record is compared with the imported target index information, comparison may be performed on the metadata file identifier cache id first, for example, an imported metadata file identifier 1 (cache id 1) is compared with a metadata file identifier 2 (cache id 2) in the target record (where 1 and 2 are used to refer to different names, and do not limit different actual values), to determine whether the cache id is hit. If the cache id is not hit, the matching fails. If the cache id is hit, comparison continues to be performed on the hash identifier hash value, for example, a hash identifier 1 (hash value 1) obtained by calculating the imported data column index value key is compared with a hash identifier 2 (hash value 2) in the target record, to determine whether the hash value is hit. If the hash value is not hit, the matching fails. If the hash value is hit, comparison continues to be performed on a value of the data column index value key, for example, an imported data column index value 1 (key 1) is compared with a data column index value 2 (key 2) in the target record, to determine whether the key is hit. If the key is not hit, the matching fails. If the key is hit, the matching succeeds.

In this embodiment of this application, different mapping methods may be used for different data types. Therefore, when the hash identifier hash value is mapped, a target mapping method corresponding to the data column index value key needs to be found based on a type of the data column index value key.

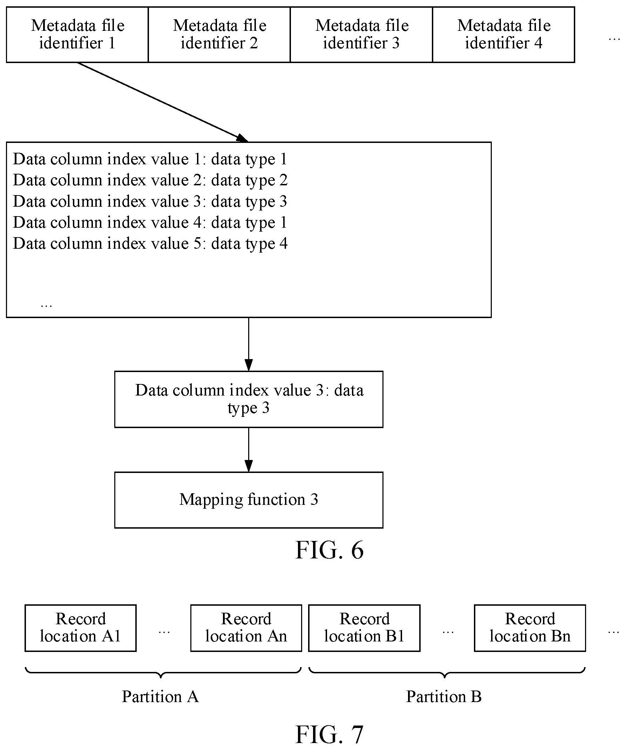

In an embodiment, considering a case in which the same key has different data types in different metadata files, to conveniently obtain types of keys in the metadata files, a file description array set is maintained in this embodiment of this application. Referring to FIG. 6, the file description array set uses the cache id as an index, and each file description array defines information such as types of keys under different cache ids, for example, indicates a data type of each data column in a corresponding metadata file. Then, indexing is performed by using the cache id as an identifier of the file description array, a corresponding file description array can be found through the cache id. The metadata file identifier cache id is imported, so that a corresponding target file description array can be obtained from a plurality of file description arrays in the file description array set. Referring to FIG. 6, the corresponding file description array can be obtained through the metadata file identifier 1 (cache id 1), and includes a data type of each key in a metadata file of the cache id 1. Certainly, in addition to the data type, the corresponding file description array may further include other possible information, which is not limited in this embodiment of this application.

Further, a target data type associated with the data column index value key is obtained based on the target file description array. In this way, a target mapping method corresponding to the target data type may be determined accordingly. The target mapping method corresponding to the target data type is invoked, to perform hash value mapping on the data column index value key, to obtain the hash identifier hash value. As shown in FIG. 6, when the key is a data column index value 3 (key 3), that the data type of the key is a data type 3 can be obtained, and the target mapping method corresponding to the key is a mapping function 3. Further, the mapping function 3 can be invoked to calculate the hash value.

Similarly, when comparison is performed on the key values, considering that comparison manners for different data types are different, the target data type associated with the key is also needed to determine a comparison function used during comparison, and the determined comparison function is further invoked to perform comparison on the key values.

In this way, based on a case of accelerating searching by using the hash identifier, considering that a hash collision may exist, secondary matching is performed by using the metadata file identifier, the data column index value, and the hash identifier, to ensure precision of matching a target cache description array.

Operation 302: Access, when the matching succeeds and based on a target slot identifier associated with the target index information, a target cache description array corresponding to the target metadata.

In this embodiment of this application, when index information stored in the target record is completely the same as the target index information, it is considered that the matching succeeds.

In this embodiment of this application, in addition to the index information, each record further stores a slot identifier on a second layer, for example, the cache description array, in the global cache data structure. Then, after the matching succeeds, the target slot identifier associated with the target index information may be obtained from the target record, and the target cache description array corresponding to the target metadata is further accessed based on the target slot identifier.

Based on the foregoing example of the hash table, a subscript is further stored in the entry, and the subscript corresponds to a next-layer cache description array. When the metadata file identifier cache id, the data column index value key, and the hash identifier hash value are all successfully matched, it is considered that the target index information is successfully matched. In this way, a subscript corresponding to a current entry may be obtained, to index to a corresponding cache description array.

In this embodiment of this application, because the global cache data structure is shared by the plurality of working processes, the plurality of working processes can access the global cache data structure. Then, to avoid a conflict during access by the plurality of working processes, a locking operation needs to be performed on accessed data.

In an embodiment, when the target process accesses the global cache file, a first locking operation needs to be performed on the global cache file, to add a shared lock to the global cache file. That the shared lock exists represents that currently, a working process is accessing the global cache file. When some operations may be performed on the global cache file, for example, a modification or deletion operation is performed on the global cache file, it may need wait for the access to end. When access to the global cache file by the target process ends, for example, after the slot identifier of the cache description array is obtained, a corresponding unlocking operation needs to be performed, to release the shared lock of the global cache file.

Considering that after locking is performed on an entire global cache file in a single working process, a lock conflict problem may be caused, for example, within this access period, another working process cannot perform writing on the global cache file, and waiting duration is excessively long, which may cause task blocking. To improve a condition of the lock conflict, a partitioned global cache file is used in this embodiment of this application, for example, the global cache file may include a plurality of file partitions, and each file partition is configured for storing at least one record. FIG. 7 is a schematic diagram of partitions of a global cache file according to an embodiment of this application. Two partitions, for example, a partition A and a partition B, are shown in FIG. 7. Each partition may include a plurality of record locations. For example, the partition A includes record locations A1 to An, and the partition B includes record locations B1 to Bn.

Then, when the global cache file is accessed, a target file partition in which the target record is located is determined based on the foregoing query record identifier hash key obtained through calculation, and then the first locking operation is performed on the target file partition, to add the shared lock to the target file partition, which represents that currently, a working process is accessing the target file partition, and another partition except the target file partition is not locked. Similarly, after access to the target file partition ends, the unlocking operation also needs to be performed on the target file partition, to release the shared lock of the target file partition.

For example, when the hash key obtained through calculation is located in the partition A, the locking operation is performed on the partition A. When the partition B is not locked, a write operation may be performed on the partition B by another process, to avoid the lock conflict problem caused by locking the entire global cache file.

In this embodiment of this application, the locking operation refers to using a corresponding flag location as information representing a corresponding lock. For example, for the target file partition, a shared lock flag location corresponding to the target file partition may be included. In this way, when locking is performed on the target file partition, the shared lock flag location is in a locked state, or information about the target process is added to the flag location, to represent that the target process performs locking on the flag location. Alternatively, the locking operation may also refer to that the shared lock of the target file partition needs to be applied for when the target file partition is accessed. When the shared lock is issued to the target process, it is considered that the locking succeeds.

Access performed by the target process described in this embodiment of this application may include two manners, for example, the target process accesses data, or the target process accesses the data through the proxy process. This is not limited in this embodiment of this application.

Operation 303: Determine a current data state of the target metadata based on the target cache description array.

In this embodiment of this application, the cache description array is configured for storing information such as control information of the cached metadata, information for describing a use condition of a corresponding memory block, and a memory offset corresponding to metadata information. Each cache description array may include one or more pieces of the following information.
(1) A state field. The state field is a data description of a current cache description array, and may include information such as a desc lock state, a reference count (refcount) parameter, an access count (usecount) parameter, and a state. For example, the foregoing information may be carried through 32 bits, for example, the foregoing information may depend on a 32-bit data description.

The desc lock state represents whether a lock is added and a lock atomic operation is implemented. When some operations are performed on the cache description array, a lock state of the state field needs to be updated. For example, when a bit state on refcount or usecount is modified, a lock needs to be held.

The refcount parameter is configured for reference counting, for example, when the cache description array is accessed, refcount is increased by 1, and after access is completed, refcount is decreased by 1. Usecount describes a quantity of access counts after being loaded into a cache. Generally, a maximum value, for example, 5 may be configured for usecount, and usecount is mainly configured for detection during memory replacement.

When the state is a cache state, the state is represented by a process, which indicates that the data has been read, is being copied to the cache, and is to be read after another working process is completed. A valid state indicates that current metadata is valid, and only needs to be read.

(2) A metadata partition identifier (part_num) field, which represents metadata partition information. When division is performed based on the partitions, only information about some partitions needs to be invalidated each time, and there is no need to invalidate all caches.

(3) A partition version information (part_version) field, which represents a version number of a current metadata partition. Generally, part_num and part_version may be used in combination, different part_num fields correspond to different version numbers, and may be compared with version information of global storage, to determine whether current metadata is valid.

(4) A valid metadata deadline (lease) field, where a lease is a regular time period and is configured for representing a time point at which the metadata is invalid. Before the deadline, the metadata is valid. Expired data is untrusted, and the data needs to be re-obtained from a metadata server for caching.

(5) A memory address (offset) field, which represents address information of the metadata cache, and may be represented by using a memory offset address.

(6) A data lock (content_lock) field. An exclusive lock needs to be added when metadata obtained from the metadata server is written, and a shared lock needs to be added when the metadata is read.

(7) A next field, which may be used to store a subscript of a next value when the metadata is excessively long and cannot be cached in a single memory block, for example, cannot be stored in the single memory block with a space of 8K, or imported index information is not unique, and a returned result is a list.

Further, when the cache description array is accessed, a target metadata partition identifier corresponding to the target metadata may be obtained from the cache description array, and whether version information of the partition identifier is consistent with the version information of the global storage may be further determined. The global storage may mean that another set of version information may be maintained in a current device, and is configured for storing latest version information of each metadata partition. Alternatively, the global storage may obtain the latest version information from the metadata server. Alternatively, subscription may be made to a DDL operation of the metadata server. When the DDL operation is performed, a metadata partition targeted by the operation may be learned, and version information of a corresponding metadata partition may be further modified.

The cache description array also stores partition version information corresponding to the target metadata partition identifier. Comparison is performed between the version information of the corresponding metadata partition and the partition version information corresponding to the target metadata partition identifier, to determine whether the versions are consistent, so as to determine whether the target metadata is valid.

In an embodiment, latest partition version information of a target metadata partition may be obtained based on a target metadata partition identifier corresponding to the target metadata, and then the latest partition version information is compared with the partition version information stored in the target cache description array. If the latest partition version information is consistent with the partition version information stored in the target cache description array, it indicates that currently cached target metadata has become invalid and needs to be re-obtained. If the latest partition version information is consistent with the partition version information stored in the target cache description array, and it is determined, based on a lease in the cache description array, that the target metadata currently does not expire, it is determined that the target metadata is currently in a valid state. If the latest partition version information is consistent with the partition version information stored in the target cache description array, and it is determined, based on a lease in the cache description array, that the target metadata currently expires, it is also determined that the target metadata is currently invalid.

Before target address information is returned, whether the target metadata is valid is recognized, so that correctness of a response to the metadata query request can be greatly improved, incorrect or invalid target metadata can be prevented from being obtained by the target progress, and response precision can be improved.

In this embodiment of this application, to help determine the version information, an auxiliary process may be further added, and is configured for regularly obtaining a global transaction service (GTS) from a GTS server, and convert the GTS into a timestamp in a particular conversion manner. In a backend process, the timestamp is compared with the cached lease, to determine whether a current cache is invalid. In addition, the auxiliary process detects etcd middleware, to obtain a version number corresponding to each part of the metadata information, for use during the foregoing comparison.

Operation 304: Obtain, from the target cache description array when the data state is the valid state, target address information of a target memory block that caches the target metadata, and return the target address information to the target process.

The target address information is configured for indicating location information of the target memory block in a shared memory. The shared memory is the foregoing contiguous memory, and is configured for a metadata shared cache. To facilitate storage and management of the metadata, storage areas of the metadata may be divided based on different data lengths, so that different metadata may be stored into memory blocks of corresponding sizes when the metadata is cached.

In an embodiment, when the target metadata is currently in the valid state, a value of the offset field may be provided for the target process from the target cache description array, so that the target process may access the target metadata based on a memory address.

In this embodiment of this application, for each cache description array, when the cache description array is accessed, the reference count parameter refcount and the access count parameter usecount in the corresponding cache description array may be updated. When access ends, the reference count parameter refcount in the corresponding cache description array also needs to be updated. For example, when a cache description array whose ID is 0 is accessed, a desc locking operation needs to be performed on the cache description array, to add a desc lock to the cache description array. Then, a refcount++ operation and a usecount++ operation are performed, for example, both refcount and usecount are increased by 1. When access ends, for example, after the target address information is obtained and returned to the target process, a refcount-- operation is performed, for example, refcount is decreased by 1, and access is exited.

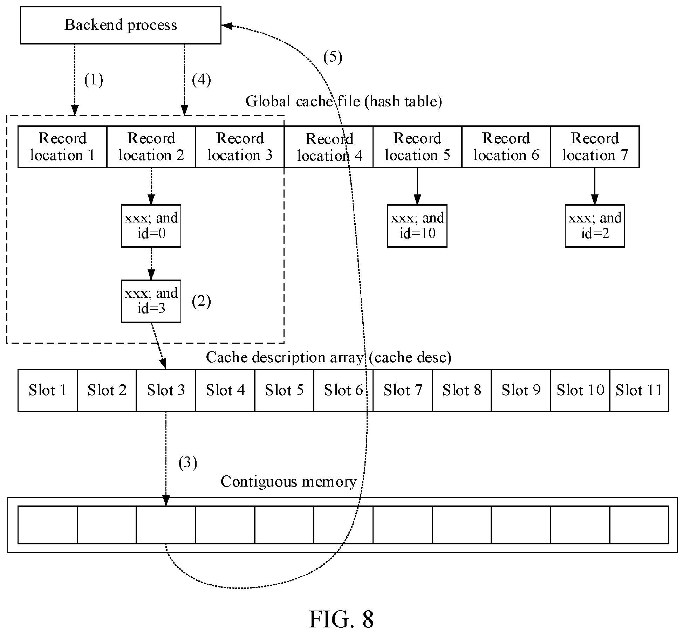

The following describes the technical solutions of the embodiments of this application by using an example of metadata access. FIG. 8 is a schematic flowchart of accessing a piece of cached metadata according to an embodiment of this application. The following operations are included.

Operation (1): A backend process imports a cache id and a key of to-be-queried target metadata, finds a calculation function of a hash value based on the imported cache id, calculates the hash value based on a value of the key, and uses a shared lock of a corresponding file partition based on the calculated hash value, for example, adds the shared lock to the corresponding file partition, for example, adds the shared lock to partitions in which record locations 1 to 3 are located.

Operation (2): Find a corresponding desc subscript based on the imported key.

In an embodiment, during searching, comparison is performed on the cache id first, and then, comparison is performed on the hash value, and finally, comparison is performed based on the value of the imported key. When the cache id, the hash value, and the value of the imported key are all matched and hit, it is determined that the target metadata that is currently queried has been cached, and corresponds to a record in a hash table, to obtain the desc subscript, for example, a slot identifier of a cache description array, from the record.

A hash collision may exist, and a plurality of records may be stored at a location corresponding to the same hash value. Referring to FIG. 8, two records corresponding to metadata are stored at a record location 2, for example, "id=0" and "id=3" shown in FIG. 8. Therefore, during matching, after a corresponding record location is found by using the hash value or a hash key, each record at the record location also needs to be further matched with the value of the imported key, to determine whether the record is matched and hit. As shown in FIG. 8, the record "id=3" at the record location 2 is finally hit. The slot identifier of the cache description array represented by "id=3" points to a slot 3.

Operation (3): Access the cache desc on the slot 3 based on the subscript "id=3", and determine a data state of target metadata corresponding to the cache desc. The cache desc stores a memory offset. When the metadata is valid, a memory offset address of the target metadata can be obtained from the cache desc.

In an embodiment, part_version corresponding to part_num cached in a current cache description array is consistent with part_version of global storage. If a lease does not expire, a data state is a valid state. A corresponding desc lock is added to the cache description array, and a refcount++ operation and a usecount++ operation are performed.

When corresponding metadata changes, part_version changes, and whether part_version is the latest needs to be verified. The lease is a regular time period. Expired data is untrusted, and the data needs to be re-obtained. Therefore, when the two items satisfy conditions, it is determined that the target metadata is in the valid state.

Operation (4): Release the shared lock of the corresponding file partition in the hash table.

Operation (5): Return the memory offset address of the target metadata to the backend process.

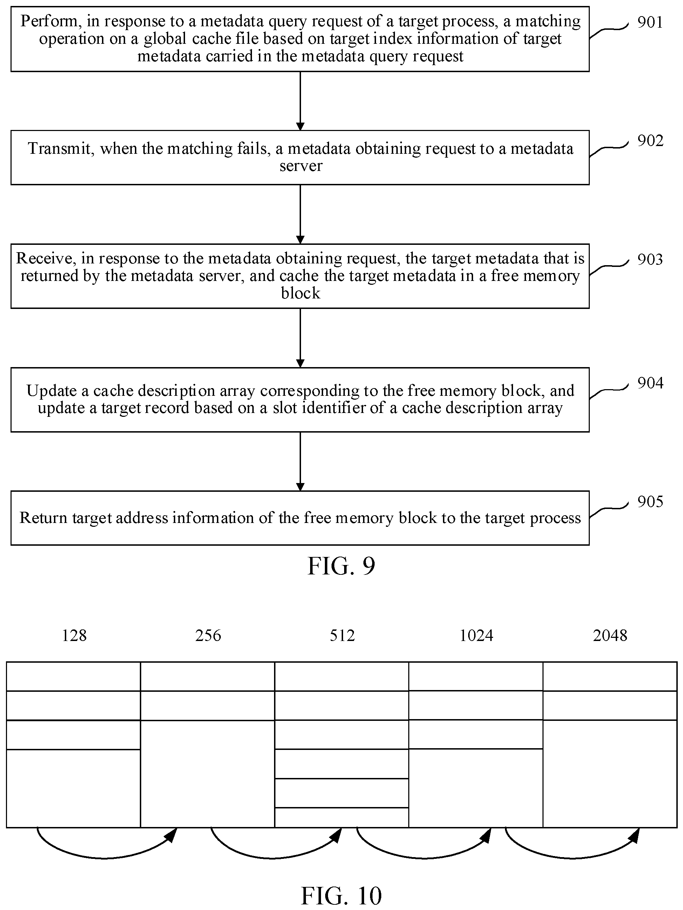

In this embodiment of this application, when the target metadata is queried, there may be a case in which the target metadata is not locally cached. In this case, the target metadata needs to be obtained and cached locally, and then a corresponding memory address is returned. FIG. 9 is another schematic flowchart of a metadata access method according to an embodiment of this application. The following operations are included.

Operation 901: Perform, in response to a metadata query request of a target process, a matching operation on a global cache file based on target index information of target metadata carried in the metadata query request.

A process of operation 901 is similar to the foregoing process of operation 301 shown in FIG. 3. Therefore, refer to descriptions in the foregoing part. Details are not described herein again.

Operation 902: Transmit, when the matching fails, a metadata obtaining request to a metadata server.

In an embodiment, when matching is performed based on imported target index information, if any information included in the target index information is not matched and hit, it indicates that the matching fails.

For example, when the target index information includes a cache id and a key, a calculation function of a hash value is found based on the imported cache id, and the hash value is calculated by using the calculation function based on a value of the key. The hash value and the cache id are combined to obtain a hash key. A corresponding target record location is further determined, a shared lock of a target file partition in which the target record location is located is added, and then values of the cache id, the hash value, and the key are sequentially compared. If any one of the above is not matched, it is determined that the matching fails.

When the matching fails, it indicates that the target metadata is not cached. In this way, the shared lock of the target file partition is released, and a second locking operation is performed on the target file partition in which a target record is located, to add an exclusive lock to the target file partition. Meanings of the exclusive lock lie in that another process except the target process is prohibited from accessing the target file partition, to avoid a conflict with an operation of the another process when writing is performed on the target record location.

Further, after the exclusive lock is added, the target record may be updated based on the target index information, and a state of the target record is marked as a cache state. For example, the values of the cache id, the hash value, and the key are first stored in the target record location, the state is marked as a process, and a slot identifier of a cache description array is not set.

After writing of the foregoing information is completed, an unlocking operation is performed on the target file partition, to release the exclusive lock of the target file partition, and the metadata obtaining request is transmitted to the metadata server, to obtain the target metadata.

Operation 903: Receive, in response to the metadata obtaining request, the target metadata that is returned by the metadata server, and cache the target metadata in a free memory block.

In this embodiment of this application, when there is a free memory block, the obtained target metadata may be directly stored in the free memory block.

During actual application, a free list may be maintained. In this way, when whether there is a free memory block needs to be determined, the free list may be queried.

In a possible implementation, the free list may be a free memory list, and is configured for storing information about the free memory block. Whether the free memory list is empty may be queried to determine whether there is a free memory block.

In an embodiment, because memory blocks are divided based on different sizes, the free memory list may also be stored in partitions based on the sizes of the memory blocks. As shown in FIG. 10, division is performed based on an upper limit of stored data. The memory blocks may be classified into memory blocks whose sizes are 128, 256, 512, 1024, 2048, and the like. Free memory blocks of various sizes may be separately maintained and stored through respective corresponding sublists. When whether there is a free memory block is determined, traversing may be performed, based on a data length of the target metadata, starting from a suitable memory block size. Traversing is sequentially performed to determine whether there is a free memory block. For example, if the data length of the target metadata is 489K, starting from a memory block whose size is 512, traversing may be first performed to determine whether there is a free memory block whose size is 512. If there is no free memory block whose size is 512, traversing continues to be performed to determine whether there is a free memory block whose size is 1024, until the traversing ends or the free memory block is found.

In a possible implementation, the free list may be a free slot list. Each slot is in one-to-one correspondence with each memory block. Therefore, whether there is a free slot may also be determined, to determine whether there is a free memory block. Similar to the structure in FIG. 10, a process of determining a free slot may also be similar to the foregoing process of determining the free memory block. Therefore, details are not described again.

In this embodiment of this application, an auxiliary process may be added to maintain the free list. The auxiliary process may regularly sort cache descs, and maintain a plurality of free lists. Cache descs with different memory sizes are placed in different free lists, and are placed in corresponding free lists at the beginning of initialization.

In an embodiment, the auxiliary process may traverse a cache description array set every preset period, determine whether a slot identifier of a currently traversed cache description array is in the free slot list, and obtain a refcount parameter and a usecount parameter of the cache description array when the slot identifier of the currently traversed cache description array is not in the free slot list, and sorting is performed according to the following cases.

(1) If both the obtained refcount parameter and usecount parameter are 0, it indicates that no process accesses the cache description array for a long period of time, and the slot identifier of the cache description array is added to the free slot list.

(2) If the obtained refcount parameter is 0 and the usecount parameter is not 0, it indicates that a process recently accesses the cache description array, but no process currently accesses the cache description array, and an operation of subtracting 1 is performed on the usecount parameter.

During actual application, the auxiliary process may regularly scan the cache desc array. For example, a cache desc array whose length is the shortest is scanned first based on the free list. When refcount is 0 and usecount is 0 during scanning, the cache desc array is placed in the free list. When refcount is 0 but usecount is not 0, usecount is decreased by 1. In this process, a hash entry corresponding to this slot may not be removed in advance, and is determined during actual use.

Correspondingly, when a free memory block needs to be obtained in a working process, a slot is preferentially obtained from a free list of a corresponding length. If the free list is empty, the auxiliary process needs to be activated for sorting. When a slot is selected, a condition is still that refcount is 0 and usecount is 0. If the condition in which refcount is 0 is still not satisfied after traversing is performed twice on a slot of this length, a slot of a next length may be selected for traversing. During traversing, there is a case in which refcount is 0 and usecount is not 0, and traversing needs to be continued. Usecount is continuously decreased, to find a slot satisfying the condition.

Operation 904: Update a cache description array corresponding to the free memory block, and update the target record based on a slot identifier of the cache description array.

Correspondingly, after the target metadata is stored in the free memory block, the cache description array needs to be correspondingly updated.

In an embodiment, when updating and writing are performed on the cache description array, a desc lock needs to be added to the cache description array. Then, a refcount++ operation and a usecount++ operation are performed, and a state of the cache description array is set from a process state to a valid state, which represents that the cache description array has been cached and can be read. Information such as part_num and part_version is filled in as the latest information currently.

When no metadata is stored in the free memory block, the cache description array corresponding to the free memory block does not store data, or cache description information related to previously stored metadata is not reset. Therefore, after the target metadata is stored in the free memory block, information related to the target metadata needs to be filled in.

Similarly, the cache description array is updated, and the corresponding target record further needs to be updated, for example, the slot identifier of the cache description array is stored in the target record, so that the cache description array can be correctly found based on the target record when the target metadata is subsequently queried.

In an embodiment, when writing is performed on the target record, to avoid a conflict with an operation of another working process, after the second locking operation is performed on the target file partition in which the target record is located, for example, after the exclusive lock is added, the slot identifier of the cache description array needs to be updated to the target record.

Operation 905: Return target address information of the free memory block to the target process.

In an embodiment, after caching of the target metadata is completed, the target address information of the free memory block may be returned to the target process, so that the target process obtains the target metadata from the free memory block (which refers to a memory block that stores the target metadata herein, and is not limited to a real free memory block) based on the target address information.

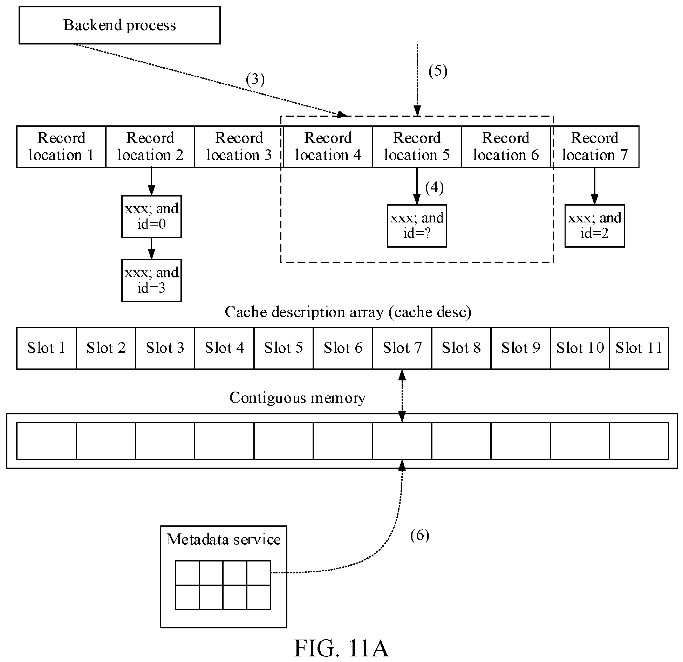

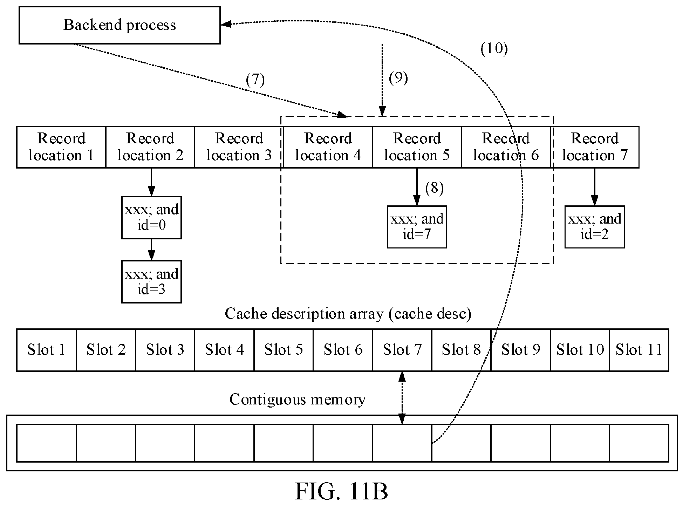

The following describes the technical solutions of the embodiments of this application by using an example of metadata access. FIG. 11A and FIG. 11B are schematic flowcharts of accessing a piece of uncached metadata and a case in which currently, a free memory is available to store the metadata according to an embodiment of this application. The following operations are included.

Operation (1) (not shown in the figure): A backend process imports a cache id and a key of to-be-queried target metadata, finds a calculation function of a hash value based on the imported cache id, calculates the hash value based on a value of the key, and uses a shared lock of a corresponding file partition based on the calculated hash value, for example, adds the shared lock to the corresponding file partition. For example, in FIG. 11A, a record location corresponding to the calculated hash value or a hash key is a record location 5, and the shared lock is added to a hash partition in which record locations 4 to 6 are located.

Operation (2) (not shown in the figure): Perform matching at the record location 5. If the matching fails, for example, if the target metadata is not found, it indicates that the target metadata is not cached, and the shared lock of the hash partition is released.

Operation (3): Add an exclusive lock of the hash partition, to prepare to write data.

Operation (4): Store values of the cache id, the hash value, the key, and the like in an entry of a hash table, in an embodiment, in a record location corresponding to the foregoing hash value or hash key, for example, the record location 5, and mark a state of a target record at the record location 5 as a process. A cache description array is not determined yet. Therefore, a slot identifier of a cache desc is not set. Correspondingly, "id=?" in FIG. 11A indicates that the slot identifier is unknown.

Operation (5): Release the exclusive lock of the hash partition.

Operation (6): Request the target metadata from a metadata server, obtain a free memory block based on a data length of the target metadata to store the target metadata, add a desc lock to a cache description array corresponding to the free memory block, perform a refcount++ operation and a usecount++ operation, set a state in the cache description array as a valid state, and fill in information such as part_num and part_version.

Referring to FIG. 11A, based on the data length, a memory block corresponding to a slot 7 is determined as a free memory block that stores the target metadata, and a metadata service is invoked remotely, for example, the target metadata is obtained from the metadata server. After the target metadata is stored, information in a cache description array on the slot 7 is updated.

Operation (7): To add the slot identifier of the cache description array to the target record, add the exclusive lock of the hash partition, indicating that data needs to be written, for example, add the exclusive lock to the hash partition in which the record location 5 is located.

Operation (8): Fill the slot identifier of the cache description array into the target record. Referring to FIG. 11B, for example, a desc subscript, for example, the slot 7, is filled in the entry. As shown in FIG. 11B, after "id=7" is filled in, if query needs to be performed subsequently, the slot 7 may be indexed based on the target record at the record location 5.

Operation (9): Release the exclusive lock of a corresponding hash partition in the hash table.

Operation (10): Return a memory offset address of the target metadata to the backend process.

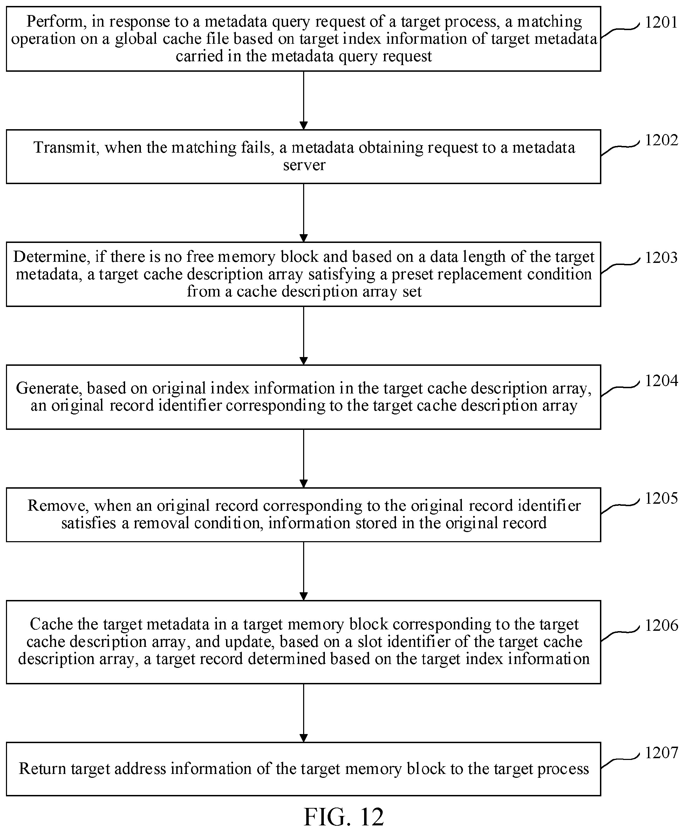

In this embodiment of this application, when the target metadata is queried, there may be a case in which the target metadata is not locally cached. In this case, the target metadata needs to be obtained and cached locally, and then a corresponding memory address is returned. However, there may be a case in which it is found that currently a free memory block is not available for directly storing the metadata during storage, and replacement needs to be performed, for example, originally stored metadata is overwritten to store metadata that currently needs to be stored. FIG. 12 is still another schematic flowchart of a metadata access method according to an embodiment of this application. The following operations are included.

Operation 1201: Perform, in response to a metadata query request of a target process, a matching operation on a global cache file based on target index information of target metadata carried in the metadata query request.

A process of operation 1201 is similar to the foregoing process of operation 301 shown in FIG. 3. Therefore, refer to descriptions in the foregoing part. Details are not described herein again.

Operation 1202: Transmit, when the matching fails, a metadata obtaining request to a metadata server.

Operation 1203: Determine, if there is no free memory block, a target cache description array satisfying a preset replacement condition from a cache description array set.

When all memory blocks are fully cached, there is no free memory block. In this case, replacement needs to be performed. The replacement means that a memory block that originally stores other metadata is replaced with a memory block configured for storing the target metadata that is currently queried.

In an embodiment, because the memory block corresponds to the cache description array, whether the replacement condition is satisfied may be determined based on the cache description array. Generally, the memory block that can be replaced needs to be a memory block that has not been accessed for a long time. Heat of the metadata is not high and the metadata can be replaced. However, when each cache description array is accessed by the target process, a refcount parameter and a usecount parameter in the cache description array are updated. Therefore, the heat of the metadata and whether a process is accessing may be represented by using the refcount parameter and the usecount parameter in the cache description array. Therefore, the preset replacement condition may be that values of the refcount parameter and the usecount parameter are both 0.

Therefore, when a replaceable memory block is found, a target cache description array whose refcount parameter and usecount parameter are both 0 can be determined from the cache description array set.

In a possible implementation, because the memory block may be divided into different partitions, correspondingly, the cache description arrays may also be grouped in a corresponding manner, so that the cache description array set may be divided into a plurality of array partitions, and each array partition includes: a cache description array of a memory block of a corresponding type, cached data of memory blocks of different types having different upper limits on lengths.

Then, when the target cache description array satisfying the preset replacement condition is determined, a corresponding target array partition may be determined based on a data length of the target metadata, and the target cache description array satisfying the preset replacement condition is determined from the target array partition, so that the determined upper limit of a data length of a target memory block can be adapted to the target metadata, to avoid a case in which a storage size is exceeded. If there is no target cache description array satisfying the condition in the target array partition, waiting may be performed, and after the waiting times out, the target cache description array satisfying the condition is determined from a partition of another type.

For example, a slot is preferentially obtained from a free list of a corresponding length. If the free list is empty, an auxiliary process needs to be activated for sorting. When a slot is selected, a condition is still that refcount is 0 and usecount is 0. If the condition in which refcount is 0 is still not satisfied after traversing is performed twice on a slot of this length, a slot of a next length may be selected for traversing. During traversing, there is a case in which refcount is 0 and usecount is not 0, and traversing needs to be continued. Usecount is continuously decreased, to find a slot satisfying the condition.

During actual application, the target metadata may be first requested from the metadata server, and then whether there is a free memory block is determined. Alternatively, whether there is a free memory block is first determined, and if there is no free memory block, a replaceable target memory block is determined, and then the target metadata is requested from the metadata server. This is not limited in this embodiment of this application.

Operation 1204: Generate, based on original index information in the target cache description array, an original record identifier corresponding to the target cache description array.

During actual application, although the target cache description array is currently not accessed by a process, whether a record corresponding to the target cache description array is accessed by a process cannot be determined. If the record is accessed by another process, the current target cache description array cannot be replaced. Because the found target cache description array stores original description information of original metadata, the original record identifier corresponding to the target cache description array may be generated based on the original index information stored in the target cache description array, to find an original record identifier corresponding to the original metadata.

Operation 1205: Remove, when an original record corresponding to the original record identifier satisfies a removal condition, information stored in the original record.

For a removal condition that is similar to the foregoing removal condition, it needs to determine that accessing is not performed by another process currently. Therefore, the removal condition may refer to that accessing is not performed by another process. When the original record satisfies the removal condition, because the original metadata corresponding to the record has been replaced with other metadata for storage, the information stored in the original record may be removed, to avoid subsequent incorrect access. Whether accessing is performed by another process may be determined through the refcount parameter in the cache description array. Because accessing is currently performed by the target process, the refcount parameter needs to be 1, and if the refcount parameter is greater than 1, it indicates that accessing is performed by another process.

Operation 1206: Cache the target metadata in a target memory block corresponding to the target cache description array, and update, based on a slot identifier of the target cache description array, a target record determined based on the target index information.

When it is determined that replacement can be performed, the obtained target metadata can be cached in the target memory block corresponding to the target cache description array that has just been determined, and the target record determined based on the target index information is updated based on the slot identifier of the target cache description array, so that the corresponding target metadata can be found based on the target record during subsequent query.

Operation 1207: Return target address information of the target memory block to the target process.

In an embodiment, after caching of the target metadata is completed, the target address information of the target memory block may be returned to the target process, so that the target process obtains the target metadata from the target memory block based on the target address information.

When there is no free memory block, an appropriate target cache description array is determined, and the target metadata that currently needs to be used is replaced into the target memory block through memory block replacement. In this way, a timely response to a current metadata query request may be ensured, and replaced information does not cause an impact on the whole, thereby effectively improving system efficiency.

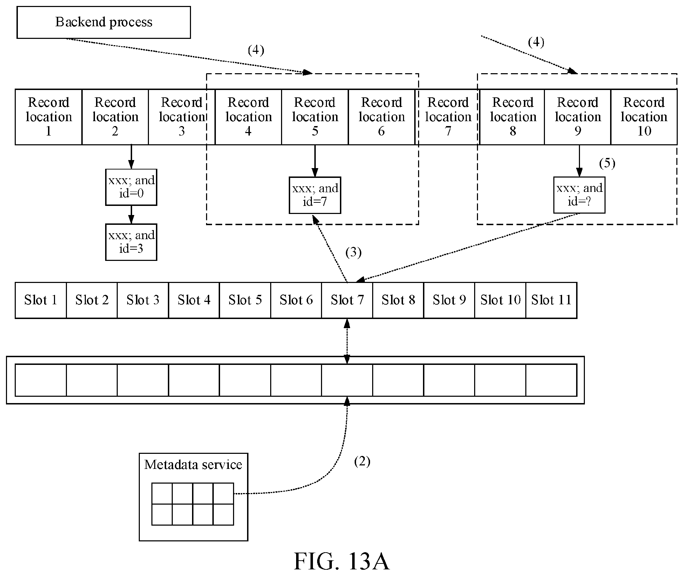

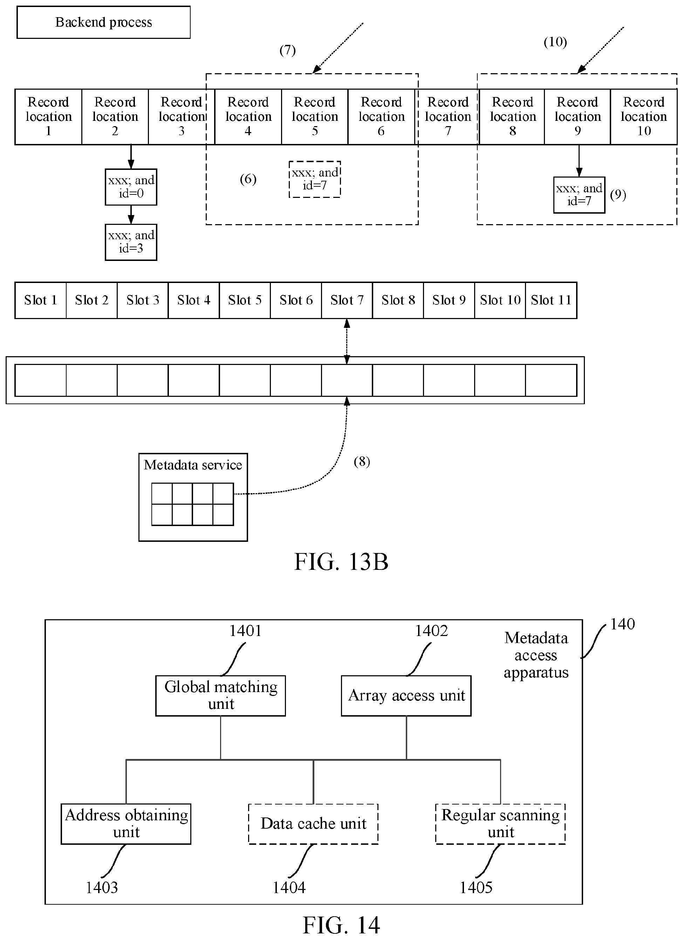

The following describes the technical solutions of the embodiments of this application by using an example of metadata access. FIG. 13A and FIG. 13B are schematic flowcharts of accessing a piece of uncached metadata and a case in which currently a free memory is not available to store the metadata according to an embodiment of this application. The following operations are included.

Operation (1) (not shown in the figure): A backend process imports a cache id and a key of to-be-queried target metadata, finds a calculation function of a hash value based on the imported cache id, calculates the hash value based on a value of the key, and uses a shared lock of a corresponding file partition based on the calculated hash value, for example, adds the shared lock to the corresponding file partition. For example, in FIG. 11A, a record location corresponding to the calculated hash value or a hash key is a record location 5, and the shared lock is added to a hash partition in which record locations 4 to 6 are located. Release the shared lock of the hash partition if the target metadata cannot be found and there is no free memory currently.

Operation (2): Request data through a remote procedure call (RPC) protocol, select a cache desc array of a corresponding length area based on a data length, find a slot with refcount=0 and usecount=0, add a desc lock to the cache desc array, and perform a refcount++ operation. Referring to FIG. 13A, a slot 7 corresponding to a 7^{th} memory block is found.

Operation (3): An old hash value is calculated based on a key stored in metadata corresponding to the slot 7, and a new hash value is calculated based on a key of to-be-queried imported target metadata.

Operation (4): Add an exclusive lock of an old hash table partition and an exclusive lock of a new hash table partition, because a record corresponding to original data in the slot 7 needs to be removed and a record of current target metadata needs to be filled in. Referring to FIG. 13A, the old hash value points to the record location 5, so that locking needs to be performed on a partition of record locations 4 to 6 in which the record location 5 is located. The new hash value points to a record location 9, so that locking needs to be performed on a partition of record locations 8 to 10 in which the record location 9 is located.

Operation (5): Fill in an entry corresponding to the new hash value calculated based on the current target metadata, skip filling in a cache desc id, and mark a state as a process, for example, fill related information except the cache desc id of the current target metadata in the record location 9.

Operation (6): Check whether refcount of desc is 1, indicating that no other process except this working process performs accessing in this period of time, and if yes, remove an old entry pointed to by the old hash value, or if no, search for an available slot again.

Operation (7): Release a partition lock corresponding to the old entry, namely, a partition lock corresponding to the partition of record locations 4 to 6.

Operation (8): Fill the target metadata read from a metadata server in a corresponding memory.

Operation (9): Update the cache desc id of the new entry to which the new hash value points. Referring to FIG. 13B, after the update, a record stored at a record location 9 points to the slot 7, for storing related information of the target metadata that is currently queried.

Operation (10): Release a partition lock of the hash table, that is, a partition lock corresponding to the partition of record locations 8 to 10.

In this embodiment of this application, when the working process reads the metadata, corresponding read locks are added to all the working processes that read the metadata, and a corresponding write lock needs to be added during a DDL operation. In this case, updating can be performed only after the read lock is released and in a normal case, a lease time period (a cache of another process expires and automatically becomes invalid after the lease time period) further needs to be waited for. However, optimization is introduced in this implementation of this application, a version number is added, partition management is performed on the metadata, a version number of a metadata partition related to the DDL operation is increased by 1, and a partition number and a partition version number are stored in a cache of a computing cluster. When the version numbers are inconsistent, data needs to be obtained from the metadata server again. In this way, the metadata server does not need to wait for the lease time period before performing the DDL operation, as long as updating of a version number of each computing cluster node is completed. In addition, in this embodiment of this application, the working process maintains a local cache, and a proxy process is further added to combine duplicate metadata requests of a plurality of processes.

In conclusion, a new metadata caching solution is provided in the embodiments of this application. A global cache is maintained, so that requests for the same metadata information between different working processes can be effectively combined. Then, some information that can be protected by locking is placed in the local cache, to effectively avoid frequently requesting data from the metadata server due to an invalid lease. The metadata caching solution can be used in a cloud native mode or a non-cloud native mode. When PG in a multi-process mode uses the global cache, a size of a memory that is used can be effectively reduced, avoiding a case in which the working process reads the same piece of metadata from a magnetic disk for a plurality of times. An invalid message does not need to be transmitted to all processes, and the working process that performs the DDL operation only needs to handle data corresponding to a current global cache that is invalid.

Referring to FIG. 14, based on the same inventive concept, an embodiment of this application further provides a metadata access apparatus 140. The apparatus includes:
a global matching unit 1401, configured to perform, in response to a metadata query request of a target process, a matching operation on a global cache file based on target index information of target metadata carried in the metadata query request, the global cache file including at least one record, and each record including: index information of cached metadata and a slot identifier of a cache description array corresponding to corresponding metadata, each cache description array corresponding to at least one memory block configured for caching the metadata;
an array access unit 1402, configured to access, when the matching succeeds and based on a target slot identifier associated with the target index information, a target cache description array corresponding to the target metadata; and
an address obtaining unit 1403, configured to obtain, from the target cache description array when determining that the target metadata is currently in a valid state based on the target cache description array, target address information of a target memory block that caches the target metadata, the target address information being configured for indicating location information of the target memory block in a shared memory; and return the target address information to the target process.

In a possible implementation, the target index information includes a metadata file identifier and a data column index value corresponding to the target metadata in the metadata file. The global matching unit 1401 is specifically configured to:
generate a corresponding hash identifier based on the data column index value in a target mapping method, and generate, based on the hash identifier and the metadata file identifier, a query record identifier corresponding to the target metadata; and
determine a target record in the global cache file based on the query record identifier, and respectively match the metadata file identifier, the data column index value, and the hash identifier with a corresponding value included in the target record.

The array access unit 1402 is specifically configured to:
access, when the metadata file identifier, the data column index value, and the hash identifier are all matched successfully and based on the target slot identifier associated with the target index information, the target cache description array corresponding to the target metadata.

In a possible implementation, the global matching unit 1401 is specifically configured to:
obtain a corresponding target file description array from a plurality of file description arrays based on the metadata file identifier, each file description array indicating: a data type of each data column in a corresponding metadata file;
obtain, based on the target file description array, a target data type associated with the data column index value; and
invoke a target mapping method corresponding to the target data type, to perform hash value mapping processing on the data column index value, to obtain the hash identifier.

In a possible implementation, the global cache file includes a plurality of file partitions, and each file partition includes at least one record. The global matching unit 1401 is further configured to:
determine, based on the query record identifier, a target file partition in which the target record is located;
perform a first locking operation on the target file partition, to add a shared lock to the target file partition, the shared lock representing: a working process is accessing the target file partition; and
perform an unlocking operation on the target file partition, to release the shared lock of the target file partition after accessing, when the matching succeeds and based on the target slot identifier associated with the target index information, the target cache description array corresponding to the target metadata.

In a possible implementation, the apparatus further includes a data cache unit 1404, configured to:
transmit, when the matching fails, a metadata obtaining request to a metadata server;
receive, in response to the metadata obtaining request, the target metadata that is returned by the metadata server, and cache the target metadata in a free memory block;
update a cache description array corresponding to the free memory block, and update the target record based on a slot identifier of the cache description array; and
return target address information of the free memory block to the target process.

In a possible implementation, the data cache unit 1404 is specifically configured to:
perform, when the matching fails, a second locking operation on the target file partition in which the target record is located, to add an exclusive lock to the target file partition, the exclusive lock representing: another process except the target process is prohibited from accessing the target file partition;
update the target record based on the target index information, and mark a state of the target record as a cache state;
perform the unlocking operation on the target file partition, to release the exclusive lock of the target file partition, and transmit the metadata obtaining request to the metadata server, to obtain the target metadata; and
update the slot identifier of the cache description array to the target record after the second locking operation is performed on the target file partition.

In a possible implementation, the data cache unit 1404 is further configured to:
determine, if there is no free memory block, a target cache description array satisfying a preset replacement condition from a cache description array set;
generate, based on original index information in the target cache description array, an original record identifier corresponding to the target cache description array;
remove, when an original record corresponding to the original record identifier satisfies a removal condition, information stored in the original record;
cache the target metadata in the target memory block corresponding to the target cache description array, and update, based on a slot identifier of the target cache description array, the target record determined based on the target index information; and
return the target address information of the target memory block to the target process.

In a possible implementation, the cache description array set includes a plurality of array partitions, and each array partition includes: a cache description array of a memory block of a corresponding type, cached data of memory blocks of different types having different upper limits on lengths.

The data cache unit 1404 is specifically configured to:
determine a corresponding target array partition based on a data length of the target metadata; and
determine the target cache description array satisfying the preset replacement condition from the target array partition.

In a possible implementation, the cache description array includes a reference count parameter and an access count parameter. The apparatus includes a regular scanning unit 1405, configured to:
update, for each cache description array when accessing the cache description array, the reference count parameter and the access count parameter in the corresponding cache description array.

The data cache unit 1404 is specifically configured to:
determine, from the cache description array set, the target cache description array whose reference count parameter and access count parameter are both 0.

In a possible implementation, the target cache description array includes a metadata partition identifier, partition version information, and a valid metadata deadline.

The address obtaining unit 1403 is specifically configured to:
obtain latest partition version information of a target metadata partition based on a target metadata partition identifier corresponding to the target metadata; and
determine that the target metadata is currently in the valid state when the latest partition version information is consistent with storage partition version information in the target cache description array, and determining, based on the valid metadata deadline, that the target metadata currently does not expire.

In a possible implementation, the regular scanning unit 1405 is configured to:
traverse the cache description array set every preset period, and respectively perform the following operations:
obtaining the reference count parameter and the access count parameter of the cache description array if a slot identifier of a currently traversed cache description array is not in a free slot list;
adding the slot identifier of the cache description array to the free slot list if both the obtained reference count parameter and the obtained access count parameter are 0; and
performing an operation of subtracting 1 on the access count parameter if the obtained reference count parameter is 0 and the access count parameter is not 0.

Through the foregoing apparatus, a solution of metadata global caching is used. For all working processes, the metadata needed by the working processes can be accessed in this method. Therefore, metadata caches of the working processes do not need to be maintained by the working processes, duplicate metadata caches between the working processes are reduced, occupied memory resources are reduced, transmission resources occupied by duplicate metadata are reduced, and resource utilization is improved.

The apparatus may be configured to perform the method shown in the embodiments of this application. Therefore, for the functions that can be implemented by functional modules of the apparatus, reference may be made to the descriptions in the foregoing embodiments. Details are not described herein again.

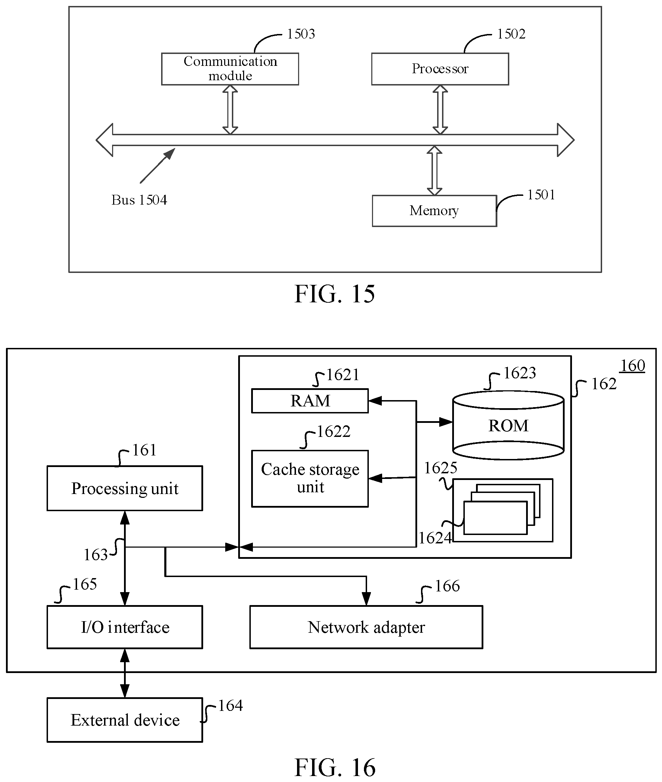

Referring to FIG. 15, based on the same technical concept, an embodiment of this application further provides a computing apparatus. In an embodiment, the computing apparatus may be the computing node or the terminal device shown in FIG. 1. As shown in FIG. 15, the computing apparatus includes a memory 1501, a communication module 1503, and one or more processors 1502.

The memory 1501 is configured to store a computer program executed by the processor 1502. The memory 1501 may mainly include a program storage area and a data storage area. The program storage area may store an operating system and a program required for running functions of this embodiment of this application; and the data storage area may store various instant communication information, an operation instruction set, and the like.

The memory 1501 may be a volatile memory. The memory 1501 may also be a non-volatile memory. Alternatively, the memory 1501 is any other medium that can be configured to carry or store desired program code in a form of instructions or a data structure and that can be accessed by a computer, but is not limited thereto. The memory 1501 may be a combination of the foregoing memories.

The processor 1502 may include one or more central processing units (CPUs), a digital processing unit, or the like. The processor 1502 is configured to implement the foregoing metadata access method when invoking the computer program stored in the memory 1501.

The communication module 1503 is configured to communicate with a computing node, a metadata server, a terminal device, and the like.

Specific connecting media among the memory 1501, the communication module 1503, and the processor 1502 above are not limited in the embodiments of this application. In the embodiments of this application, in FIG. 15, the memory 1501 and the processor 1502 are connected through a bus 1504. The bus 1504 is depicted with a thick line in FIG. 15. Connection manners among other components are merely for exemplary description, and this application is not limited thereto. The bus 1504 may be classified into an address bus, a data bus, a control bus, and the like. For ease of description, only one thick line is used to represent the bus in FIG. 15, but it does not indicate that there is only one bus or one type of bus.

The memory 1501 has a computer storage medium stored therein. The computer storage medium has computer-executable instructions stored therein. The computer-executable instructions are configured for implementing the metadata access method in the embodiments of this application. The processor 1502 is configured to perform the metadata access method in the foregoing embodiments, as shown in FIG. 3, FIG. 9, or FIG. 12.

The following describes a computing apparatus 160 according to this implementation of this application with reference to FIG. 16. The computing apparatus 160 in FIG. 16 is merely an example, and does not constitute any limitation on functions and a usage scope of the embodiments of this application.

As shown in FIG. 16, the computing apparatus 160 is represented in a form of a general-purpose computing apparatus. Components of the computing apparatus 160 may include, but are not limited to: at least one processing unit 161, at least one storage unit 162, and a bus 163 connecting different system components (including the storage unit 162 and the processing unit 161).

The bus 163 represents one or more of several types of bus structures, including a memory bus or a memory controller, a peripheral bus, a processor, or a local bus using any of a plurality of bus structures.

The storage unit 162 may include a readable medium in a form of volatile memory, such as a random access memory (RAM) 1621 and/or a cache storage unit 1622, and may further include a read-only memory (ROM) 1623.

The storage unit 162 may further include a program/utility 1625 having a set of (at least one) program modules 1624. Such program module 1624 includes, but is not limited to: an operating system, one or more application programs, other program modules, and program data, and each or a combination of these examples may include implementation of a network environment.

The computing apparatus 160 may also communicate with one or more external devices 164 (for example, a keyboard or a pointing device), or may communicate with one or more devices that enable a user to interact with the computing apparatus 160, and/or may communicate with any device (for example, a router or a modem) that enables the computing apparatus 160 to communicate with one or more other computing apparatuses. Such communication may be performed through an input/output (I/O) interface 165. In addition, the computing apparatus 160 may further communicate with one or more networks (for example, a local area network (LAN), a wide area network (WAN), and/or a public network such as the internet) through a network adapter 166. As shown in the figure, the network adapter 166 communicates with other modules configured in the computing apparatus 160 through the bus 163. Although not shown in the figure, other hardware and/or software modules may be used in combination with the computing apparatus 160, including but not limited to: microcode, a device driver, a redundant processor, an external disk drive array, a redundant array of independent disks (RAID) system, a tape driver, a data backup storage system, and the like.

Based on the same inventive concept, an embodiment of this application further provides a storage medium, having a computer program stored therein. The computer program, when run on a computer, causes the computer to perform the operations in the metadata access method according to various exemplary implementations of this application described above in the specification.

In some possible implementations, various aspects of the metadata access method provided in this application may be further implemented in a form of a computer program product. The computer program product includes a computer program. When the program product is run on a computer device, the computer program is configured for causing the computer device to perform the operations in the metadata access method according to various exemplary implementations of this application described above in the specification. For example, the computer device may perform the operations in the embodiments.

The program product may use any combination of one or more readable media. The readable medium may be a readable signal medium or a readable storage medium. The readable storage medium may be, for example, but is not limited to, an electric, magnetic, optical, electromagnetic, infrared, or semi-conductive system, apparatus, or device, or any combination thereof. More specific examples (a non-exhaustive list) of the readable storage medium include: an electrical connection having one or more wires, a portable disk, a hard disk, a RAM, a ROM, an erasable programmable read-only memory (EPROM or a flash memory), an optical fiber, a portable compact disc read-only memory (CD-ROM), an optical storage device, a magnetic storage device, or any appropriate combination thereof.

The program product in the implementation of this application may use the CD-ROM and include the computer program, and may be run on the computer device. However, the program product in this application is not limited thereto. In this application, the readable storage medium may be any tangible medium including or storing a program, and the computer program included may be used by or used in combination with a command execution system, an apparatus, or a device.

The readable signal medium may include a data signal propagated in a baseband or as a part of a carrier. The data signal carries a readable computer program. The propagated data signal may be in a plurality of forms, including but not limited to, an electromagnetic signal, an optical signal, or any appropriate combination thereof. The readable signal medium may also be any readable medium other than the readable storage medium. The readable medium may send, propagate, or transmit a program that is used by or used in combination with the command execution system, the apparatus, or the device.

The computer program included in the readable medium may be transmitted by using any appropriate medium, including but not limited to, a wireless medium, a wired medium, an optical cable, radio frequency (RF), or the like, or any appropriate combination thereof.

The computer program configured to perform the operations of this application may be written in any combination of one or more programming languages. The programming languages include object-oriented programming languages such as Java and C++, and further include conventional procedural programming languages such as a "C" language or similar programming languages.

Although several units or subunits of the apparatus are mentioned in the foregoing detailed descriptions, such division is merely exemplary and not mandatory. In fact, according to the implementations of this application, the features and functions of two or more units described above may be embodied in one unit. On the contrary, the features and functions of one unit described above may be further divided and embodied in a plurality of units.

In addition, although the operations of the method in this application are described in a order in the accompanying drawings, this does not require or imply that the operations have to be performed in the order, or all the operations shown have to be performed to achieve an expected result. Additionally or alternatively, some operations may be omitted, a plurality of operations may be combined into one operation, and/or one operation may be decomposed into a plurality of operations for execution.

A person skilled in the art needs to understand that the embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a magnetic disk memory, the CD-ROM, an optical memory, and the like) that include computer-usable program code.

Although exemplary embodiments of this application have been described, a person skilled in the art can make additional changes and modifications to these embodiments once they learn the basic creative concept. Therefore, the following claims are intended to be construed as to cover the exemplary embodiments and all changes and modifications falling within the scope of this application.

Apparently, a person skilled in the art can make various modifications and variations to this application without departing from the spirit and scope of this application. In this case, if the modifications and variations made to this application fall within the scope of the claims of this application and equivalent technologies thereof, this application is intended to include these modifications and variations.

According to some embodiments, each module or unit may exist respectively or be combined into one or more units. Some units may be further split into multiple smaller function subunits, thereby implementing the same operations without affecting the technical effects of some embodiments. The units are divided based on logical functions. In actual applications, a function of one unit may be realized by multiple units, or functions of multiple units may be realized by one unit. In some embodiments, the apparatus may further include other units. These functions may also be realized cooperatively by the other units, and may be realized cooperatively by multiple units.

A person skilled in the art would understand that these "modules" could be implemented by hardware logic, a processor or processors executing computer software code, or a combination of both. The "modules" may also be implemented in software stored in a memory of a computer or a non-transitory computer-readable medium, where the instructions of each module are executable by a processor to thereby cause the processor to perform the respective operations of the corresponding module.

The foregoing embodiments are used for describing, instead of limiting the technical solutions of the disclosure. A person of ordinary skill in the art shall understand that although the disclosure has been described in detail with reference to the foregoing embodiments, modifications can be made to the technical solutions described in the foregoing embodiments, or equivalent replacements can be made to some technical features in the technical solutions, provided that such modifications or replacements do not cause the essence of corresponding technical solutions to depart from the spirit and scope of the technical solutions of the embodiments of the disclosure and the appended claims.

## Claims

1. A metadata access method, the method being executable by a computer device and comprising:
performing, in response to a metadata query request of a target process, a comparison operation between target index information of target metadata carried in the metadata query request and index information of each cached metadata in a global cache file, the global cache file comprising at least one record, each record comprising: index information of cached metadata, and a slot identifier of a cache description array associated with the cached metadata, and each cache description array mapping to at least one memory block configured for storing said cached metadata;
accessing, upon detecting a match from the comparison operation, a target cache description array for the target metadata based on a target slot identifier associated with the target index information;
obtaining, from the target cache description array when determining that the target metadata is currently in a valid state, address information of a target memory block caching the target metadata, the address information of the target memory block being configured to indicate location information of the target memory block in a shared memory; and
returning the address information of the target memory block to the target process.

2. The method according to claim 1,
wherein the target index information comprises a metadata file identifier and a data column index value of the target metadata in a metadata file; and
wherein the performing, in response to a metadata query request of a target process, a comparison operation between target index information of target metadata carried in the metadata query request and index information of each cached metadata in a global cache file comprises:
generating a hash identifier based on the data column index value using a target mapping method, and generating, based on the hash identifier and the metadata file identifier, a query record identifier for the target metadata; and
determining a target record in the global cache file based on the query record identifier, and respectively matching the metadata file identifier, the data column index value, and the hash identifier with a corresponding value comprised in the target record; and
wherein the accessing, upon detecting a match from the comparison operation, a target cache description array for the target metadata based on a target slot identifier associated with the target index information comprises:
accessing, when the metadata file identifier, the data column index value, and the hash identifier are all matched successfully and based on the target slot identifier associated with the target index information, the target cache description array for the target metadata.

3. The method according to claim 2, wherein the generating a hash identifier based on the data column index value using a target mapping method comprises:
obtaining a target file description array from a plurality of file description arrays based on the metadata file identifier, each file description array indicating a data type of each data column in an associated metadata file;
determining, based on the target file description array, a target data type associated with the data column index value; and
invoking a target mapping method for the target data type, to map the data column index value to a hash value, and generate the hash identifier.

4. The method according to claim 2,
wherein the global cache file comprises a plurality of file partitions, and each file partition comprises at least one record;
wherein after the generating, based on the hash identifier and the metadata file identifier, a query record identifier for the target metadata, the method further comprises:
determining, based on the query record identifier, a target file partition where the target record is located; and
performing a first locking operation on the target file partition, to add a shared lock to the target file partition, the shared lock indicating that a working process is accessing the target file partition; and
wherein after the accessing, when the matching succeeds and based on a target slot identifier associated with the target index information, a target cache description array for the target metadata, the method further comprises:
performing an unlocking operation on the target file partition to release the shared lock of the target file partition.

5. The method according to any one of claims 2 to 4, wherein after the determining a target record in the global cache file based on the query record identifier, the method further comprises:
transmitting, when the matching fails, a metadata obtaining request to a metadata server;
receiving, in response to the metadata obtaining request, the target metadata returned by the metadata server, and caching the target metadata in a free memory block;
updating a cache description array for the free memory block, and updating the target record based on a slot identifier of the cache description array; and
returning address information of the free memory block to the target process.

6. The method according to claim 5,
wherein the transmitting, when the matching fails, a metadata obtaining request to a metadata server comprises:
performing, when the matching fails, a second locking operation on the target file partition where the target record is located, to add an exclusive lock to the target file partition, the exclusive lock indicating that another process except the target process is prohibited from accessing the target file partition;
updating the target record based on the target index information, and marking a state of the target record as a cache state; and
performing an unlocking operation on the target file partition to release the exclusive lock of the target file partition, and transmitting the metadata obtaining request to the metadata server to obtain the target metadata; and
wherein the updating the target record based on a slot identifier of the cache description array comprises:
updating the slot identifier of the cache description array to the target record after the second locking operation is performed on the target file partition.

7. The method according to claim 5, wherein after the receiving, in response to the metadata obtaining request, the target metadata returned by the metadata server, the method further comprises:
determining, in response to no free memory block being available, a target cache description array satisfying a preset replacement condition from a cache description array set;
generating, based on original index information in the target cache description array, an original record identifier for the target cache description array;
removing, when an original record associated with the original record identifier satisfies a removal condition, information stored in the original record;
caching the target metadata in the target memory block for the target cache description array, and updating, using a slot identifier of the target cache description array, the target record determined based on the target index information; and
returning the address information of the target memory block to the target process.

8. The method according to claim 7,
wherein the cache description array set comprises a plurality of array partitions, and each array partition comprises a cache description array of a memory block of a matching type, cached data of memory blocks of different types having different upper limits on lengths; and
wherein the determining, in response to no free memory block being available, a target cache description array satisfying a preset replacement condition from a cache description array set comprises:
determining a target array partition matching a data length of the target metadata; and
determining the target cache description array satisfying the preset replacement condition from the target array partition.

9. The method according to claim 7,
wherein the cache description array comprises a reference count parameter and an access count parameter; and the method further comprises:
updating the reference count parameter and the access count parameter in each cache description array when accessing the cache description array; and
wherein the determining, in response to no free memory block being available, a target cache description array satisfying a preset replacement condition from a cache description array set comprises:
determining, from the cache description array set, the target cache description array whose reference count parameter and access count parameter are both 0.

10. The method according to any one of claims 1 to 4,
wherein the target cache description array comprises a metadata partition identifier, partition version information, and a valid metadata deadline; and
wherein the method further comprises:
obtaining latest partition version information of a target metadata partition based on a target metadata partition identifier of the target metadata; and
determining that the target metadata is currently in the valid state when the latest partition version information is consistent with storage partition version information in the target cache description array, and determining, based on the valid metadata deadline, that the target metadata currently does not expire.

11. The method according to any one of claims 1 to 4, further comprising:
traversing a cache description array set at each preset interval, and performing the following operations for each traversed array:
obtaining a reference count parameter and an access count parameter of the cache description array if a slot identifier of a currently traversed cache description array is not in a free slot list;
adding the slot identifier of the cache description array to the free slot list if both the obtained reference count parameter and the obtained access count parameter are 0; and
performing an operation of subtracting 1 on the access count parameter if the obtained reference count parameter is 0 and the obtained access count parameter is not 0.

12. A metadata access apparatus, comprising:
a global matching unit, configured to perform, in response to a metadata query request of a target process, a comparison operation between target index information of target metadata carried in the metadata query request and index information of each cached metadata in a global cache file, the global cache file comprising at least one record, each record comprising: index information of cached metadata and a slot identifier of a cache description array associated with the cached metadata, and each cache description array mapping to at least one memory block configured for storing said cached metadata;
an array access unit, configured to access, upon detecting a match from the comparison operation, a target cache description array for the target metadata based on a target slot identifier associated with the target index information; and
an address obtaining unit, configured to obtain, from the target cache description array when determining that the target metadata is currently in a valid state, address information of a target memory block caching the target metadata, the target address information of the target memory block being configured to indicate location information of the target memory block in a shared memory; and return the address information of the target memory block to the target process.

13. A computer device, comprising a memory, a processor, and a computer program stored in the memory and capable of being run on the processor,
the processor, when executing the computer program, implementing the operations of the method according to any one of claims 1 to 11.

14. A computer storage medium, having a computer program stored therein,
the computer program, when executed by a processor, implementing the operations of the method according to any one of claims 1 to 11.

15. A computer program product comprising a computer program, the computer program product, when run on a computer, causing the computer to perform the operations of the method according to any one of claims 1 to 11.
